# EUROPEAN PATENT SPECIFICATION

(11) **EP 1 531 943 B1**
(45) Date of publication and mention of the grant of the patent: **07.12.2016**
(21) Application number: 02731014.3
(22) Date of filing: 24.05.2002
(51) Int. Cl.: B04C 9/00, B01D 17/038, B01D 45/12

(54) **DYNAMIC PARTICLE SEPARATOR**
DYNAMISCHER TEILCHENABSCHEIDER
SEPARATEUR DE PARTICULES DYNAMIQUE

(43) Date of publication of application: 25.05.2005
(73) Proprietor: BRI Cleanup AS, 5347 Ågotnes (NO)
(72) Inventor: AREFJORD, Anders, Mathias, N-5200 Os (NO)
(74) Representative: Acapo AS
(86) International application number: PCT/NO2002/000183
(87) International publication number: WO 2003/099448

(56) References cited:
- DE-A1- 1 461 090
- NO-A- 20 005 979
- US-A- 4 167 438

## Description

The present invention relates to a device for a dynamic particle separator for separation of particles in a liquid, gas or both, where the separator comprises a tank which is equipped with an upper inlet opening and an upper and a lower outlet opening for export of liquid/gas and particles, respectively, furthermore, the tank comprises a shaft fitted with a number of vanes or blades, that are arranged to be driven by an adjoining motor as it is known from DE1461090.

The starting point for the invention is the problems of the oil industry in that sand, often in considerable amounts, is produced together with oil and gas. This is a phenomenon which is known all over the world. The sand follows the liquid and gas stream by way of the wellheads to large parts of the processing plants, and can also be found in separated water that is re-injected in the wells that are used for pressure support in the reservoirs.

Furthermore, sand and other particles occur very often in considerable amounts at different types of well and drilling operations. Sand and particles in liquid and gas streams lead to physical wear and reduced lifespan for equipment such as valves, pipe systems and pumps. A reduced capacity and thereby diminished production are other consequential damages which result from the presence of sand, in addition to weakened safety. Lately, separation and deposition of oil/sand mixtures is an area which the environmental authorities are giving increased attention to.

Different technical solutions have been used in an effort to separate particles from the liquid/gas stream. The most common method is to use filters of different kinds and dimensions.

A common problem is that filters block when there are large amounts of sand and particles in the liquid/gas stream. Cleaning procedures for filters can be complicated and/or time and resource demanding.

Another solution is to use hydrocyclones, which with the help of the centrifugal force, utilise the difference in specific gravity between particles and the liquid/gas in the separation process. The process takes place in cone-formed cylinders. The particles that are separated are taken out from an opening in the bottom of the cone, while cleaned fluid is taken out at the top of the cylinder.

Traditional, passive cyclones of this type place certain demands on the flow velocity of the fluid to function effectively. If the liquid/gas velocity falls outside the area the passive cyclone is designed for, the output falls, sometimes drastically. The internal diameter of the head of the cyclone is accurately adjusted to the estimated flow velocity and volume of the liquid/gas stream. At high pressures and large amounts of gas in the fluid stream, the presence of sand will be able to wear down the cyclone in some hours or days. Furthermore, the passive cyclone type has an essential application limitation, as it cannot be applied where the well-pressure is low. This is the case for many wells all over the world, and occurs often in ocean bed wells. The reason for this lies in the mode of operation itself. Passive cyclones collect/use the energy in/from the fluid stream for separation of the particles. Pressure losses in cyclones can go up to 8 - 12 bar.

As mentioned this leads to large costs for oil companies and a considerable effort to separate particles, for example, during oil production, because sand particles have damaging effects on the equipment through which the oil is transported. This can be a transporter, or ship's tanks and refineries. Within the process industry, particles can also lead to erosion of pipe systems among other things, with the associated safety risks, and also blockage of filters. So far, the equipment that is used for the separation has been dependent on particle size and on the flow velocity of the liquid and/or gas wherein they are found.

The particle separator according to the invention is defined in the appended claims 1-8. The separator can be used in particular for, for example, separation of sand particles from oil and gas in oil production pipes, separation of particles in process industry or separation of particles, for example, in a water supply. The separation of particles takes place in two steps, in that the largest particles in a number of cases follow the inner wall of a tank and fall out of this, while in a step two one circulates, by way of a motorised vane system, the gas and/or liquid stream together with particles around the outside and inside of an enclosed cylinder with slits, something which results in fine particles being actively driven out to the edges of the tank by the centrifugal force as they have larger mass density than the medium.

The particles slip through the slits in an inner cylinder into an outer annular space. Thereafter, due to force of gravity, they will fall down to the bottom of the tank, where they are led out or to a second underlying tank for particle collection or to a drainage system, at the same time as the liquid is all the time led out from an outlet opening connected to the top of the upper pressure tank. Today, there exist no appliances which are based on the same principle in two steps, which can separate out particles in a liquid and/or gas stream. No existing appliances are based on a combination of passive own rotation and actively to rotate the fluid flow at the same time. Today's appliances are more dominated by traditional filtration, or are based on pure cones in which a mixed medium circulates only on the basis of its own flow velocity. The appliances that exist today are not capable of separating out particles in a flowing medium with alternating high and low flow velocity, and can normally not separate out particles of different sizes and mass densities, for example sand that varies from approximate clay to approximate gravel. With the present invention it is possible to carry out separation independent of the particle size and independent of the flow velocity of the flowing medium.

From known techniques, EP 0473566 B1 can be mentioned, among others. This document discloses a hydrocyclone apparatus that comprises an extended hollow body with inlet and outlet openings, where inside the hollow body or cylinder, a first vortex flow of liquid at an upper end and second vortex flow at a lower part of the cylinder, are formed. A conical cover is placed in the lower part to ensure that heavier particles which fall down are not whirled up again by the swirling flow. Vanes or the like are not used to provide the swirling flow.

Furthermore, WO 80/02651 shall also be pointed out. This invention discloses to a dust separator, in which a shaft with a filter blade that rotates is fixed in a cyclone separator. Dust and particles are separated out mainly by the help of filters that rotate.

None of today's known appliances use a two-step means to increase the rotation velocity of the flowing medium. It has been shown that there is a need to be able to carry out the separation of a high fraction of particles of varying sizes at varying flow velocities, for example, because one wishes to avoid wear, repeated circulation of the oil stream through several containers and filters, or the use of several cleaning methods. Moreover, there is a need because a method which the invention uses results in considerable cost reduction for, for example, oil companies in relation to use existing methods.

What is obtained with the invention in relation to today's techniques, is above all that the user can generally improve the output from the particle separation through a chosen circulation of medium that contains particles. The user gets his costs for systems for separation of particles considerably reduced, in addition to the wear problems due to particles in pipelines and other equipment being reduced considerably and results in reduced maintenance costs. The user does not become dependent on that the particles which separate out fall within a narrow area regarding size, or that separation can only be carried out within a narrow range of flow velocities.

The means which ensure that this is achieved, are firstly that a solution is developed based on a hydraulic, pneumatic or electric motor with a shaft, provided with rotor blades inside a pipe-formed cylinder with slits, which contribute to increase the rotation velocity, in a way adjusted for the medium in a container with a flow through of, for example, liquid, gas and particles. Furthermore, pressure tanks ensure that the system can operate under most conditions, at the same time as a system for regular removal of particles from the particle tank leads to that a practical collection of the separated particles can take place.

The present invention relates in particular to a dynamic particle separator for separation of particles in a fluid, gas or both, in which the separator comprises an outer cylinder or tank, that is equipped with an upper inlet opening and an upper and a lower outlet opening for export of liquid/gas and particles, respectively, furthermore the tank comprises a shaft, equipped with a number of vanes or blades, which is arranged to be driven by an adjoining motor. What characterises the invention is that a centrally placed pipe-formed inner cylinder is arranged around the shaft with said vanes or blades, and that the inner cylinder comprises a number of slits.

Alternative preferred embodiments of the invention are characterised in that the number of said slits can be arranged longitudinally and spaced apart, or with spiral/helical form, in the inner pipe-formed cylinder.

The inner cylinder can be shaped with a circular-cylindrical form and the cylinder can surround the whole of the shaft with the vanes or blades. Alternatively, the inner cylinder can be shaped in a circular-cylindrical form and the cylinder can surround a part of the shaft with the vanes or blades.

It is preferred that the slit comprises an outer and/or an inner lip. Where the inner lip can be designed with an inward extending lip part, and the inner lip and/or the outer lip is fitted adjoining to, or integrated with, the slit.

The shaft comprises, in the longitudinal direction, a circular-shaped and outwardly extending fixed support means, where the support means is arranged to increase the centrifugal velocity of the particles that are to be separated. The support means can be arranged around the shaft, and the circumference of the support means is preferably larger at the lower part of said means than at the upper part. Furthermore, the support means can be shaped in the form of a drop, and with the outwardly extending vanes or blades arranged spaced apart, around or in the support means.

A gas barrier is fitted in the lower part of the outer cylinder, where the gas barrier is arranged to prevent a gas column being driven down into the lower outlet opening for particles.

Furthermore, the invention relates to a method defined in claim 9 for
separation of particles in a liquid, a gas or both, in which a stream of liquid and/or gas and particles is led into a particle separator through an inlet opening and into a tank which comprises a shaft with a number of vanes or blades for dynamic particle separation, whereupon the particles are led out through a lower outlet opening for particles while liquid and gas are continuously led out through an upper outlet opening for gas and liquid by way of an opening in the top lid. The liquid/gas stream is fed through an inner pipe-formed cylinder arranged in the tank and that particles in the said stream are driven out through a number of slits in the pipe-formed inner cylinder towards the inside of the wall in the tank, whereby they are driven out through the lower outlet opening for particles, at the same time as liquid and/or gas is led out through the upper outlet opening for gas and liquid by way of the opening in the top lid.

The particles that are to be separated, in addition to the influence of the vanes or blades, are given increased centrifugal velocity with the aid of a support means arranged about the shaft.

The invention shall now be explained further with reference to the enclosed drawings, in which;
Figure 1 shows a schematic diagram of the device according to the invention.
Figure 2 shows a corresponding view of the device, according to the invention, seen from above.

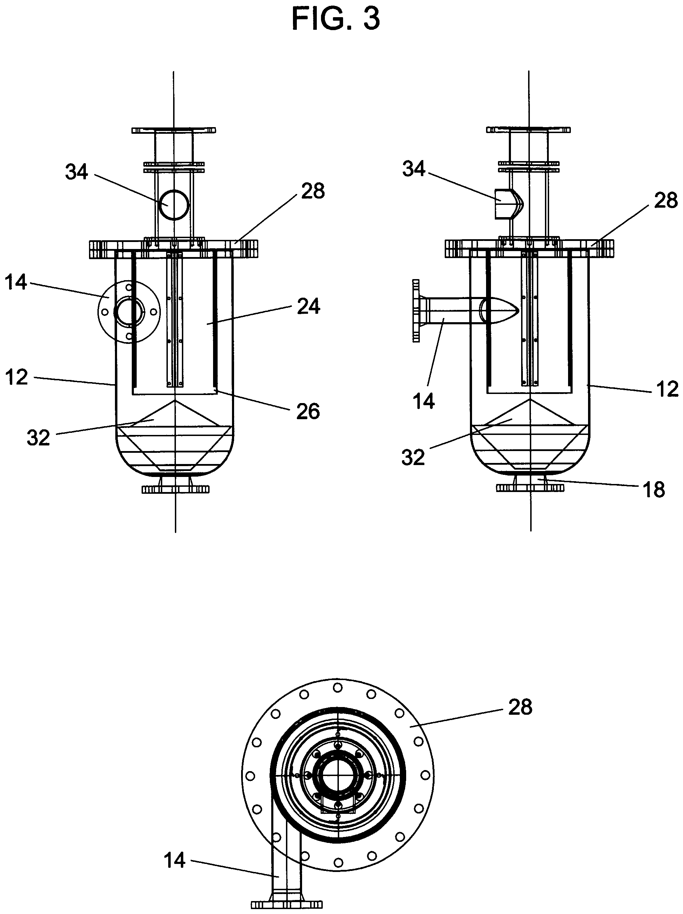

Figure 3 shows a partial outline of the invention seen from the front, from the side and from above, respectively.
Figure 4 shows an inner cylinder according to the invention.
Figure 5 shows an inner/outer lip for fitting onto the inner cylinder.
Figure 6 shows an alternative embodiment of an inner shaft with blades according to the invention.

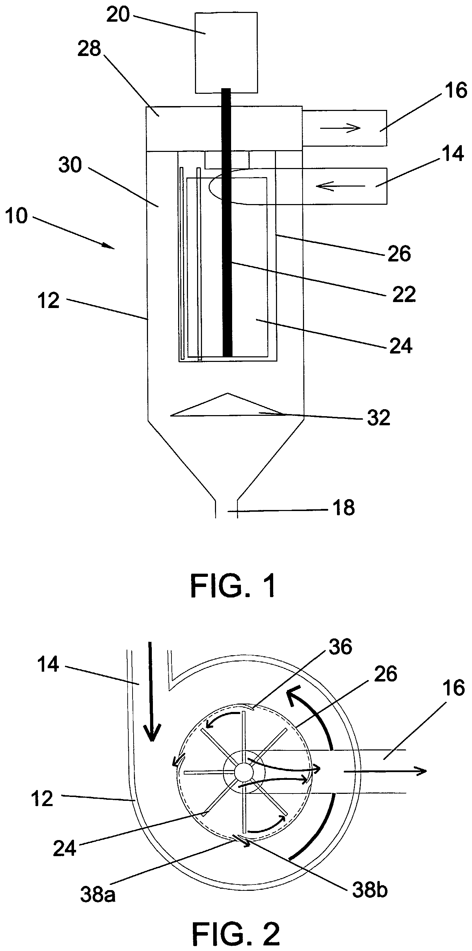

As figure 1 shows, the particle separator 10, according to the invention, comprises an outer tank or cylinder 12, an inlet 14 for liquid and gas, that contains particles which are to be separated, and an upper outlet 16 and a lower outlet 18 for export of liquid/gas and particles respectively. The separator 10 further comprises an adjoining drive gear 20, such as a motor, to drive a shaft 22 which is arranged centrally in the longitudinal direction of the cylinder 12. The drive gear 20 (the motor) can be connected directly to the shaft 22 or it can be connected to the shaft 22 by way of a power transmission system (not shown).

A number of outwardly extending blades or impellors 24 are arranged around the shaft 22. Figures 1 and 2 show that the impellors 24 are arranged extending outwards and spaced apart in the longitudinal direction of the shaft, but the impellors can also be arranged around the shaft in a helical form, or in other ways to that shown in the drawings. Furthermore, an inner pipe-formed cylinder 26 is arranged around the shaft with the impellors 24, where the inner pipe-formed cylinder 26 is permanently secured to a top lid 28 arranged adjoining the upper part of the cylinder 12. The impellors 24 contribute secondarily to provide a centrifugal liquid/gas movement in the outer cylinder 12, and primarily to provide a centrifugal liquid/gas flow in the inner cylinder 12.

Between the inner surface of the outer cylinder 12 and the outer surface of the inner cylinder 26, an outer annular space 30 is provided that is arranged to receive the gas/liquid stream. Furthermore, an inner annular space is provided in the inner cylinder 26 between the inner surface of the inner cylinder and the shaft with the vanes, also arranged to receive the gas/liquid stream.

A gas barrier 32 is arranged adjoining the lower part of the tank, where the gas barrier is arranged to prevent a gas column being driven down into the lower outlet opening 18 for particles. This gas barrier can be designed with a conical shape where the conical part of the barrier turns upwards into the tank. The aim of the gas barrier 32, or the inverted conical "hat", in the lower part of the cylinder 12, is to prevent that a swirling flow or "vortex" is created which is formed by gas in the centre of the rotating liquid/particle stream at high velocities, and that said swirling flow is transmitted down into the lower outlet opening 18 for particles in the bottom section of the separator. The opening between the conical hat and the cylinder wall provides a narrowing which contributes to the particles being pulled down toward the opening in the bottom, something which is a desired effect. It is preferred that the gas barrier 32 as mentioned, is designed with a conical shape, but the gas barrier can also be formed in other geometrical shapes, such as for example, a plate shape, half-ball shape, shell shape, inverted half ball shell, etc.

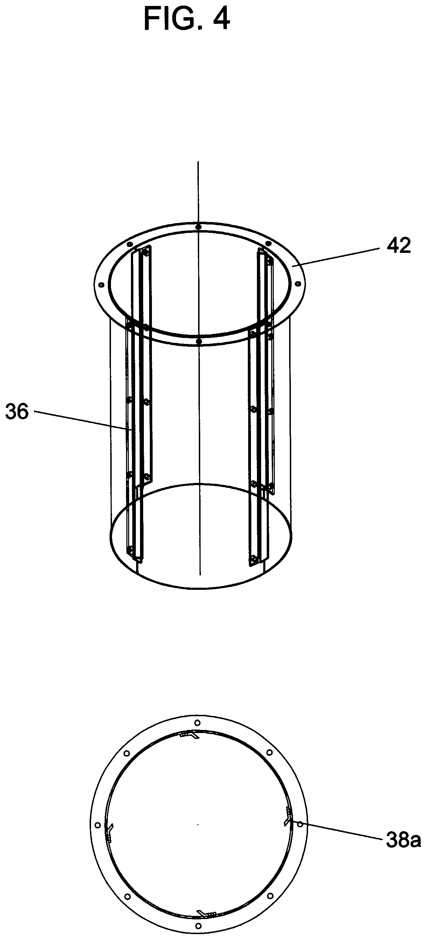

An essential part of the present invention is the inner cylinder 26 and its shape. The inner cylinder can be shaped with a circular-cylindrical pipe-form comprising an upper edge or ridge 42, where the upper ridge 42 is permanently fixed to the top lid 28. The lower end 24 is preferably open, but can if necessary be completely or partially closed depending on the stream medium, flow velocity, etc. Vertically arranged in the pipe-wall of the inner cylinder 26 are a number of through slits 36, where the slits are preferably arranged to be equally spaced apart. The slits are shown in figure 4 to be arranged vertically in the cylinder 26, but can, off course, be arranged in different ways in the pipe-wall in alternative preferred embodiments, for example with a helical shape, or the slits can be arranged diagonally in the pipe-wall of the cylinder 26, either in parallel or in the form of a fan.

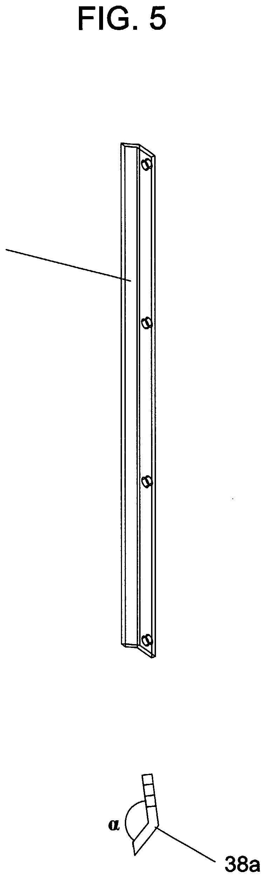

The slits can be formed with an inner and an outer lip 38a,38b respectively, as shown in figure 2, arranged to increase, or alter, the velocity of the liquid/gas stream, dependent on desired particle separation, particle size, density, viscosity, etc of the medium that is supplied. The slits 36 can be manufactured integrated in the inner cylinder, whereupon the inner lip and/or the outer lip is formed in, and made by, the opening of the slit. The inner pipe-formed cylinder can also be manufactured with pure openings/slits only, onto which the inner lip and/or the outer lip is fitted. Figure 5 shows an example of an inner lip which is fitted onto the inner cylinder shown in figure 4. Figure 4 shows a number of lips fitted onto the inner cylinder. In the main, the outer lip 38b will be formed inversely proportional to the inner lip 38a, if an inner and an outer lip are used, but not necessarily with the same angular relationship with respect to the pipe-wall of the inner cylinder. To avoid turbulence inside the inner pipe-formed cylinder at high impellor velocity, it can be an advantage to use external slit lips mounted on diagonally/helical-formed slits in parallel down the inner cylinder.

The flow of medium out from the inner cylinder, through the slits 36 and out into the annular space between the inner cylinder and inner wall of the outer cylinder 12 is dependent on the angle α. The angle α can be set to a general angle adapted to suit most flowing media that are to be led into the separator. However, it will also be possible to regulate the angle α based on the viscosity of the flowing medium. Low viscosity will normally lead to a larger tangential angle of the inner or the outer lip in relation to the circumference of the inner cylinder. The angular relationship is also influenced by turbulence in the open space inside the pipe end, and also how easy/difficult it is for the medium to flow from the inner to the outer annular space.

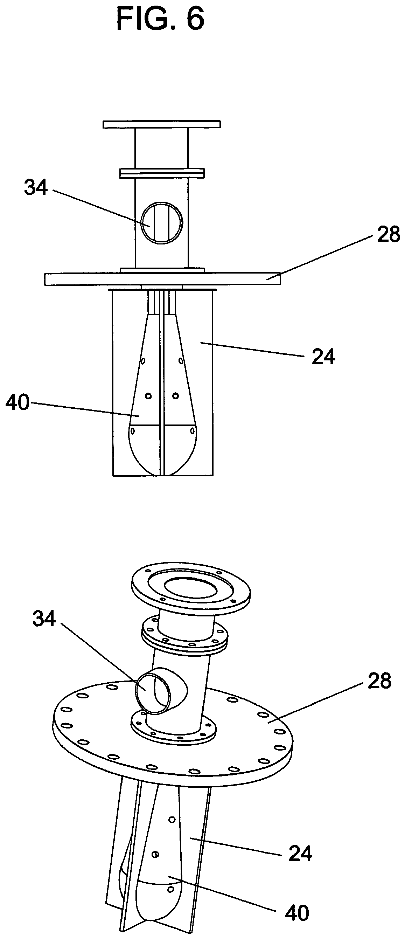

Figure 6 shows an alternative embodiment of the rotor unit, i.e. the shaft with the vanes or blades. The drawing shows the shaft mounted in the upper top lid and also the outlet 16 and the connection arrangement 44 for the drive gear. A support means 40 is arranged to the shaft 22, between the vanes 24, so that the shaft 22 comprises, in the longitudinal direction, a sircular-shaped, outwardly extending, fixed support means 40, where the support means is arranged to give the particles that are to be separated out increased centrifugal velocity. As the drawing shows, the support means 40 is arranged around the shaft, and furthermore, the lower part of the support body has a larger circumference than its upper part.

The support means 40 when it is put together can, in a preferred embodiment, be shaped in the form of a drop, and with the outwardly extending vanes or blades 24 arranged spaced apart about or in the support means. The form of the support means can if necessary vary according to application area, i.e. particle size of the particles to be separated out, flow velocity, density, etc, in that the drop form is altered. Different forms will lead to different flow characteristics for the flowing medium.

The support means 40 can further be manufactured integrated with the shaft and the vanes, or the support facility can be manufactured in sections which can thereafter be mounted between the vanes and to the shaft. The latter may be preferred in that it is thereby simple to replace sections with sections of a different form to influence the particle separation.

The aim of the support means is, among other things, to utilise the principle of gravity. By forcing the liquid/gas stream out from the centre of the shaft, the particles which are in the medium will also be forced out, these will then be influenced by a larger gravity than they were at the shaft centre. After passing the support means, the liquid/gas stream will "creep" nearer the shaft centre again. It will be more difficult for the particles to do this because of the gravitational force. Extensive tests of the invention have demonstrated this effect with this construction.

The operation of the cyclone separator according to the invention is that liquid/gas comes into the cyclone by way of the inlet opening for liquid and gas. Larger particles are separated out by the centrifugal force in the outer cylinder. Smaller particles, that are not separated out in the main cylinder, follow the fluid stream into the inner cylinder on the way to the outlet in the centre of the internal in the cylinder. The rotor, which can have a variable or fixed rotational velocity, forces fluid and any remaining smaller particles tangentially out through the slit openings, i.e. the slits in the inner cylinder and out into the outer annular space, where the particles, because of increased velocity and the centrifugal force, are forced out into the periphery and gradually separate out, where they are removed by way of the outlet. Thus, the rotor has the function that at low well-fluid velocities it provides a high rotational velocity of the fluid in the cyclone, something which makes it possible to separate out particles in a two step separation process, independent of the velocity of the supplied fluid. The present cyclone solution takes its rotation energy from the motor. This leads to the fluid flow being, to a very small extent, subjected to a pressure drop. The cyclone can approximately be neutral, pressure-wise, by a suitable choice of rotation velocity.

This "dynamic" cyclone according to the invention has in actual operation shown to be very effective in separation of particles down to about 30 micron, at the same time as the pressure drop has been reduced to 0.1 - 1 bar.

## Claims

1. Particle separator (10) for separation of particles in a liquid, gas or both, where the separator comprises an outer cylinder (12), or tank, which is equipped with an inlet opening (14) and an upper and a lower outlet opening (16,18) for exporting of liquid/gas and particles, respectively, furthermore the separator comprises a shaft (22) equipped with a number of vanes or blades (24), which are arranged to be driven by an adjoining motor (20), a centrally placed pipe-formed inner cylinder (26) is arranged around the shaft (22), with said vanes or blades (24), and the inner cylinder comprises a number of slits (36), **characterised in that**
the shaft (22) comprises in the longitudinal direction, a circular-shaped and outwardly extending permanently fastened support means (40), arranged around the shaft (22) where the circumference of the support means is larger at the lower end of said means than at the upper end to give the particles that are to be separated increased centrifugal velocity, and
a gas barrier is arranged in the lower part of the outer cylinder (12), to prevent that a gas column is driven down into the lower outlet opening (18).

2. Particle separator (10) in accordance with claim 1, **characterised in that** said number of slits (36) are arranged mainly longitudinally and spaced apart in the inner pipe-formed cylinder (26).

3. Particle separator (10) in accordance with claim 1, **characterised in that** said number of slits (36) are arranged in a mainly spiral/helical form and spaced apart in the inner pipe-formed cylinder (26).

4. Particle separator (10) in accordance with claim 2 or 3, **characterised in that** the inner cylinder (26) is designed with circular-cylindrical shape and that the cylinder surrounds the whole of the shaft (22) with the vanes or blades (24).

5. Particle separator (10) in accordance with claim 2 or 3, **characterised in that** the inner cylinder (26) is designed with a circular-cylindrical shape and that the cylinder surrounds a part of the shaft (22) with the vanes of blades (24).

6. Particle separator (10) in accordance with claims 2-5 **characterised in that** said slit (36) comprises an outer and/or an inner lip (38a,38b),

7. Particle separator (10) in accordance with claim 6, **characterised in that** the inner lip (38a) is formed with an inwardly extending lip part, and that the inner lip, and/or the outer lip (38b) is mounted adjoining to, or integrated with, the slit.

8. Particle separator (10) in accordance with claim 1, **characterised in that** the support means (40), when composed, is designed in the form of a drop and that the outwardly extending vanes or blades (24) are arranged spaced apart, around or in the support body.

9. Method for separation of particles in a liquid, gas or both, where a stream of liquid and/or gas and particles are fed into a particle separator (10) through an inlet opening (14) and into an outer cylinder (12), or tank, which comprises a shaft (22) with a number of vanes or blades (24) for dynamic particle separation,
particles are led out through a lower outlet opening (18) for particles while liquid and gas are continuously led out through an upper outlet opening (16) for gas and liquid by way of an opening (34) in a top lid (28), and
the liquid/gas stream is driven through an inner pipe-formed cylinder (26) arranged in the outer cylinder (12),
where the inner cylinder comprises a number of slits (36), **characterised in** the steps:
to drive particles in said stream out through the slits (36), toward the inner side of the wall in the outer cylinder (12),
to give the particles that are to be separated increased centrifugal velocity by a circular-shaped and outwardly extending permanently fastened support means (40) arranged around the shaft (22), in where the circumference of the support means is larger at the lower end of said means than at the upper end, and
to prevent that a gas column is driven down into the lower outlet opening (18) by a gas barrier (32) in the lower part of the outer cylinder (12),
whereby the particles are driven out through the outlet opening (18) for particles, at the same time as liquid and/or gas is led out through the outlet opening (16) for gas and liquid by way of the opening (34) in the top lid (28).

## Patentansprüche

1. Teilchenabscheider (10) für eine Abscheidung von Teilchen in einer Flüssigkeit, einem Gas oder beidem, wobei der Abscheider einen äußeren Zylinder (12), oder Tank, aufweist, der mit einer Einlassöffnung (14) und einer oberen und einer unteren Auslassöffnung (16, 18) versehen ist, um Flüssigkeit/Gas bzw. Teilchen auszuleiten bzw. auszuschleusen, überdies der Abscheider eine Welle (22) aufweist, die mit einer Anzahl Flügel oder Schaufeln (24) versehen ist, welche angeordnet sind, um von einem angrenzenden Motor (20) angetrieben zu werden, ein zentral platzierter, rohrförmiger innerer Zylinder (26) um die Welle (22), mit den Flügeln oder Schaufeln (24), angeordnet ist und der innere Zylinder eine Anzahl Schlitze (36) aufweist,
**dadurch gekennzeichnet, dass**
die Welle (22) in der Längsrichtung ein kreisförmiges und nach außen verlaufendes, dauerhaft befestigtes, um die Welle (22) herum angeordnetes Fördermittel (40) aufweist, wobei der Umfang des Fördermittels am unteren Ende des Mittels größer als am oberen Ende ist, um den Teilchen, die abzuscheiden sind, eine erhöhte Zentrifugalgeschwindigkeit zu verleihen, und
eine Gasbarriere im unteren Teil des äußeren Zylinders (12) angeordnet ist, um zu verhindern, dass eine Gassäule in die untere Auslassöffnung (18) hinab getrieben wird.

2. Teilchenabscheider (10) nach Anspruch 1,
**dadurch gekennzeichnet, dass**
die Anzahl Schlitze (36) hauptsächlich längs verlaufend und beabstandet im inneren rohrförmigen Zylinder (26) angeordnet ist.

3. Teilchenabscheider (10) nach Anspruch 1,
**dadurch gekennzeichnet, dass**
die Anzahl Schlitze (36) hauptsächlich spiral/schraubenförmig und beabstandet im inneren rohrförmigen Zylinder (26) angeordnet ist.

4. Teilchenabscheider (10) nach Anspruch 2 oder 3,
**dadurch gekennzeichnet, dass**
der innere Zylinder (26) mit einer kreiszylindrischen Form gestaltet ist und dass der Zylinder die gesamte Welle (22) mit den Flügeln oder Schaufeln (24) umgibt.

5. Teilchenabscheider (10) nach Anspruch 2 oder 3,
**dadurch gekennzeichnet, dass**
der innere Zylinder (26) mit einer kreiszylindrischen Form gestaltet ist und dass der Zylinder einen Teil der Welle (22) mit den Flügeln oder Schaufeln (24) umgibt.

6. Teilchenabscheider (10) nach Ansprüchen 2 - 5,
**dadurch gekennzeichnet, dass**
der Schlitz (36) eine äußere und/oder eine innere Lippe (38a, 38b) aufweist.

7. Teilchenabscheider (10) nach Anspruch 6,
**dadurch gekennzeichnet, dass**
die innere Lippe (38a) mit einem nach innen verlaufenden Lippenteil ausgebildet ist und dass die innere Lippe, und/oder die äußere Lippe (38b), an den Schlitz angrenzend oder mit ihm integriert montiert ist.

8. Teilchenabscheider (10) nach Anspruch 1,
**dadurch gekennzeichnet, dass**
das Fördermittel (40), wenn es zusammengesetzt ist, in der Form eines Tropfens gestaltet ist und dass die nach außen verlaufenden Flügel oder Schaufeln (24) um den oder in dem Förderkörper beabstandet angeordnet sind.

9. Verfahren zur Abscheidung von Teilchen in einer Flüssigkeit, einem Gas oder beidem, wobei ein Strom von Flüssigkeit und/oder Gas und Teilchen in einen Teilchenabscheider (10) durch eine Einlassöffnung (14) und in einen äußeren Zylinder (12), oder Tank, eingeleitet wird, welcher eine Welle (22) mit einer Anzahl Flügel oder Schaufeln (24) für eine dynamische Teilchenabscheidung aufweist,
Teilchen durch eine untere Auslassöffnung (18) für Teilchen ausgeleitet werden, während Flüssigkeit und Gas durch eine obere Auslassöffnung (16) für Gas und Flüssigkeit mittels einer Öffnung (34) in einem oberen Deckel (28) kontinuierlich ausgeleitet werden, und
der Flüssigkeits-/Gasstrom durch einen im äußeren Zylinder (12) angeordneten, inneren rohrförmigen Zylinder (26) getrieben wird, wobei der innere Zylinder eine Anzahl Schlitze (36) aufweist,
**gekennzeichnet durch** die Schritte:
Teilchen in dem Strom **durch** die Schlitze (36) heraus in Richtung auf die Innenseite der Wand im äußeren Zylinder (12) zu treiben,
den Teilchen, die abgeschieden werden sollen, eine erhöhte Zentrifugalgeschwindigkeit zu verleihen **durch** ein kreisförmiges und nach außen verlaufendes, dauerhaft befestigtes Fördermittel (40), das um die Welle (22) angeordnet ist, wobei der Umfang des Fördermittels am unteren Ende des Mittels größer als am oberen Ende ist, und
zu verhindern, dass eine Gassäule in die untere Auslassöffnung (18) hinab getrieben wird, **durch** eine Gasbarriere (32) im unteren Teil des äußeren Zylinders (12),
wodurch die Teilchen **durch** die Auslassöffnung (18) für Teilchen zu der gleichen Zeit herausgetrieben werden, wie Flüssigkeit und/oder Gas durch die Auslassöffnung (16) für Gas und Flüssigkeit mittels der Öffnung (34) im oberen Deckel (28) ausgeleitet wird.

## Revendications

1. Séparateur de particules (10) pour la séparation des particules dans un liquide, un gaz ou les deux, dans lequel le séparateur comprend un cylindre externe (12) ou réservoir, qui est équipé d'une ouverture d'entrée (14) et d'une ouverture de sortie supérieure et d'une ouverture de sortie inférieure (16, 18) pour exporter le liquide/gaz et les particules, respectivement, en outre le séparateur comprend un arbre (22) équipé d'un certain nombre de pales ou d'aubes (24) qui sont agencées pour être entraînées par un moteur attenant (20), un cylindre interne en forme de tuyau (26) placé de manière centrale est agencé autour de l'arbre (22), avec lesdites pales ou aubes (24), et le cylindre interne comprend un certain nombre de fentes (36), **caractérisé en ce que** :
l'arbre (22) comprend, dans la direction longitudinale, un moyen de support (40) de forme circulaire, fixé de manière permanente, s'étendant vers l'extérieur, agencé autour de l'arbre (22) où la circonférence du moyen de support est plus importante au niveau de l'extrémité inférieure dudit moyen qu'au niveau de l'extrémité supérieure pour donner aux particules qui doivent être séparées, une vitesse centrifuge accrue, et
une barrière de gaz est agencée dans la partie inférieure du cylindre externe (12), pour empêcher qu'une colonne de gaz ne soit entraînée vers le bas dans l'ouverture de sortie inférieure (18).

2. Séparateur de particules (10) selon la revendication 1, **caractérisé en ce que** ledit nombre de fentes (36) sont agencées principalement longitudinalement et espacées dans le cylindre interne en forme de tuyau (26).

3. Séparateur de particules (10) selon la revendication 1, **caractérisé en ce que** ledit nombre de fentes (36) sont agencées dans une forme principalement en spirale/hélicoïdale et espacées dans le cylindre interne en forme de tuyau (26).

4. Séparateur de particules (10) selon la revendication 2 ou 3, **caractérisé en ce que** le cylindre interne (26) est conçu avec une forme cylindrique circulaire et **en ce que** le cylindre entoure la totalité de l'arbre (22) avec les pales ou aubes (24).

5. Séparateur de particules (10) selon la revendication 2 ou 3, **caractérisé en ce que** le cylindre interne (26) est conçu avec une forme cylindrique circulaire et **en ce que** le cylindre entoure une partie de l'arbre (22) avec les pales ou¹ aubes (24).

6. Séparateur de particules (10) selon les revendications 2 à 5, **caractérisé en ce que** ladite ¹ La version d'origine dit « of » fente (36) comprend une lèvre externe et/ou interne (38a, 38b).

7. Séparateur de particules (10) selon la revendication 6, **caractérisé en ce que** la lèvre interne (38a) est formée dans une partie de lèvre s'étendant vers l'intérieur, **en ce que** la lèvre interne et/ou la lèvre externe (38b) est montée de manière attenante à ou solidaire avec la fente.

8. Séparateur de particules (10) selon la revendication 1, **caractérisé en ce que** le moyen de support (40), lorsqu'il est composé, est conçu sous la forme d'une goutte et **en ce que** les pales ou aubes (24) s'étendant vers l'extérieur sont agencées de manière espacée, autour et dans le corps de support.

9. Procédé pour la séparation des particules dans un liquide, un gaz ou les deux, dans lequel un flux de liquide et/ou de gaz et des particules sont amenés dans un séparateur de particules (10) par une ouverture d'entrée (14) et dans un cylindre externe (12) ou réservoir, qui comprend un arbre (22) avec un certain nombre de pales ou aubes (24) pour la séparation dynamique des particules,
des particules sont amenées par une ouverture de sortie inférieure (18) pour les particules, alors que le liquide et le gaz sont amenés de manière continue par une ouverture de sortie supérieure (16) pour le gaz et le liquide au moyen d'une ouverture (34) dans un couvercle supérieur (28), et
le flux de liquide/gaz est entraîné par un cylindre interne en forme de tuyau (26) agencé dans le cylindre externe (12),
dans lequel le cylindre interne comprend un certain nombre de fentes (36), **caractérisé par** les étapes consistant à :
entraîner des particules dans ledit flux sortant par les fentes (36), vers le côté interne de la paroi dans le cylindre externe (12), donner aux particules qui doivent être séparées, une vitesse centrifuge accrue par un moyen de support de forme circulaire, fixé de manière permanente et s'étendant vers l'extérieur (40) agencé autour de l'arbre (22), dans lequel la circonférence du moyen de support est supérieure au niveau de l'extrémité inférieure dudit moyen qu'au niveau de l'extrémité supérieure, et
pour empêcher qu'une colonne de gaz ne soit entraînée vers le bas dans l'ouverture de sortie inférieure (18) par une barrière de gaz (32) dans la partie inférieure du cylindre externe (12),
moyennant quoi les particules sont entraînées vers l'extérieur par l'ouverture de sortie (18) pour les particules, en même temps que le liquide et/ou le gaz sort par l'ouverture de sortie (16) pour le gaz et le liquide au moyen de l'ouverture (34) dans le couvercle supérieur (28).
